# EUROPEAN PATENT SPECIFICATION

(11) **EP 2 251 722 B1**
(45) Date of publication and mention of the grant of the patent: **25.07.2012**
(21) Application number: 09305436.9
(22) Date of filing: 14.05.2009
(51) Int. Cl.: G02B 6/12, G02B 6/13

(54) **A photonic integrated circuit and method of manufacturing the photonic integrated circuit**
Photonische integrierte Schaltung und Verfahren zur Herstellung der photonischen integrierten Schaltung
Circuit intégré photonique et son procédé de fabrication

(43) Date of publication of application: 17.11.2010
(73) Proprietor: Alcatel Lucent, 75007 Paris (FR)
(72) Inventor: Doerr, Christopher, MIDDLETOWN NJ New jersey 07748 (US); Zhang, Liming, HOLMDEL NJ New Jersey 07733 (US); Neilson, David, HOLMDEL NJ new Jersey 07733 (US); Weimann, Nils, GILLETTE NJ New Jersey 7933 (US)
(74) Representative: Shamsaei Far, Hassan

(56) References cited:
- ZHEN SHENG ET AL: "Investigation of evanescent coupling between SOI waveguides and heterogeneously-integrated IIIâ V pin photodetectors" INDIUM PHOSPHIDE&RELATED MATERIALS, 2009. IPRM '09. IEEE INTERNATIONAL CONFERENCE ON, IEEE, PISCATAWAY, NJ, USA, 10 May 2009 (2009-05-10), pages 159-162, XP031467202 ISBN: 978-1-4244-3432-9
- DERI ET AL: "Ultracompact Monolithic Integration of Balanced, Polarization Diversity Photodetectors for Coherent Lightwave Receivers" IEEE PHOTONICS TECHNOLOGY LETTS, vol. 4, no. 11, 11 November 1992 (1992-11-11), pages 1238-1240, XP002554161
- BOUDREA, POIRIER, YOFFE AND PEZESHIKI: "An Integrated InP Coherent Receiver for 40 and 100 Gb/Sec Telecommunications Systems" 2009 CONFERENCE ON OPTICAL FIBER COMMUNICATION - OFC 2009, 22 March 2009 (2009-03-22), - 26 March 2009 (2009-03-26) XP002554162

## Description

The present invention relates generally to optical communications and in particular to a photonic integrated circuit.

### BACKGROUND ART

In optical communications, the received optical signals need to be detected at optical receivers. Coherent detection is a known method based on converting the amplitude, phase, and polarization of an optical signal into the electrical domain, offering high sensitivity, high spectral efficiency, and the possibility of electronic compensation of signal impairments. However, a coherent receiver according to the known structures typically requires many individual components. For example one such type of known coherent receiver may include two polarization beam splitters (PBSs), two 90° hybrids, and eight photodiodes (PDs) for a preferable implementation using balanced detection. Balanced detection typically requires accurately matched insertion losses and path lengths in many of the inter-component connections which cause the overall structure to become complex. Because of this complexity, current coherent receivers often use only single-ended detection. Some drawbacks of the single-ended detection technique are that the power of the local oscillator (LO) used in the receiver must be at least about 15-dB higher than the incoming signal, the LO laser intensity noise must be low, and the signal dynamic range is small.

### SUMMARY

It is desirable to obtain a solution that enables to monolithically integrate the entire coherent receiver in a photonic integrated circuit (PIC). In this manner, the numerous components may be all lithographically connected and may much more easily be path-length matched and balanced thus readily obtaining the improved performance of balanced detection.

Furthermore, PICs can significantly contribute in reducing the size and packaging cost of final optical communication modules manufactured.

Approaches have been made towards obtaining a monolithic single-polarization single-quadrature coherent receiver PIC as well as a monolithic single-polarization dual-quadrature differential receiver PIC.

It is however desirable to provide a solution for obtaining a monolithic dual-polarization, coherent receiver PIC. Some known monolithic dual-polarization, dual-quadrature coherent receiver PICs typically require three epitaxial growths in their manufacturing process. However this is a drawback from the manufacturing point of view because of difficulties involved in transferring such scheme to a manufacturer and in making a final product with a low cost. Also some receiver PICs are known to be capable of being manufactured based on single epitaxial growth schemes. However, a drawback with this type of PICs is that they use a waveguide with an exposed core, which is likely to have a large polarization dependence thereby impairing the response of the device.

Some embodiments relate to a method of manufacturing a photonic integrated circuit comprising:
- growing, on a substrate, one or more passive sections comprising a passive core layer and at least one upper cladding layer of n-type material; and
- growing one or more photodetector sections, comprising a passive core layer, at least one upper cladding layer of n-type material, at least one absorber layer and a p-type layer having a lower refractive index than the refractive index of the absorber layer, the p-type layer having a thickness of about or greater than 300 nm;
   wherein an absolute value of the difference between a propagation constant of a guided mode, other than a fundamental guided mode, in the absorber layer and a propagation constant of a fundamental guided mode in the passive core layer is less than 0.3 rad/µm.

According to some specific embodiments, the passive section comprises:
- a buffer layer of InP material grown on a substrate of a semi-insulating material;
- an InGaAsP waveguide core layer on the buffer layer;
- a layer of n-doped InP material on the waveguide core layer wherein the InP layer is configured to serve as an upper cladding layer over the waveguide core layer, as a conductive layer and as a temperature adjustment layer; and
   the photodetector section comprises:
- a buffer layer of InP material grown on a substrate of a semi-insulating material;
- an InGaAsP waveguide core layer on the buffer layer;
- a layer of n-doped InP material on the waveguide core layer wherein the InP layer is configured to serve as an upper cladding layer over the waveguide core layer, as a conductive layer and as a temperature adjustment layer;
- a first layer of InGaAsP above the InP layer followed by a layer of InGaAs and a second layer of InGaAsP; and
- the p-type layer.

Some embodiments relate to a photonic integrated circuit comprising one or more passive sections, a passive section comprising a passive core layer and at least one upper cladding layer of n-type material; one or more photodetector sections, a photodetector section comprising a passive core layer and at least one upper cladding layer of n-type material and at least one absorber layer and a p-type layer having a lower refractive index than the refractive index of the absorber layer; and wherein an absolute value of the difference between a propagation constant of a guided mode, other than a fundamental guided mode, in the absorber layer and a propagation constant of a fundamental guided mode in the passive core layer is less than 0.3 rad/µm.

According to some specific embodiments, the p-type layer has a thickness of about or greater than 300 nm.

Some embodiments relate to a dual-polarization receiver comprising the photonic integrated circuit.

According to some specific embodiments, the receiver is a monolithic InP dual-polarization receiver.

Some embodiments refer to an optical receiver unit comprising the dual-polarization receiver or a monolithic InP dual-polarization receiver.

These and further features and advantages of the present invention are described in more detail in the following description as well as in the claims with the aid of the accompanying drawings.

### BRIEF DESCRIPTION OF THE DRAWINGS

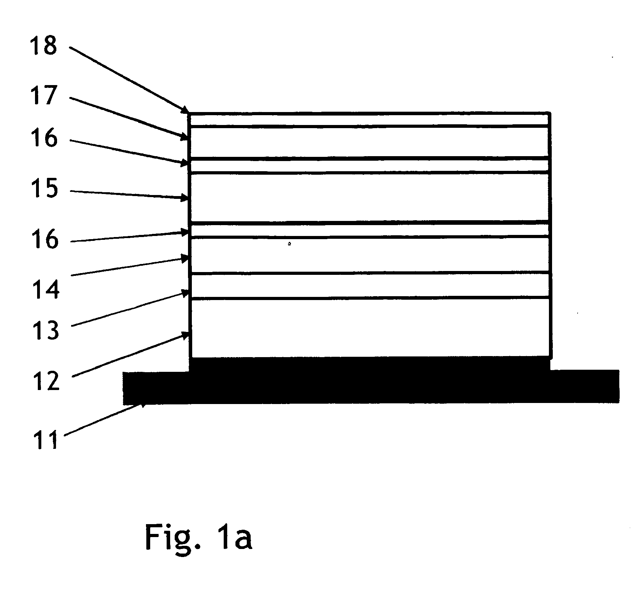

Figure 1a is an exemplary schematic representation of a structure comprising layers of material grown to form a photonic integrated circuit according to some embodiments.

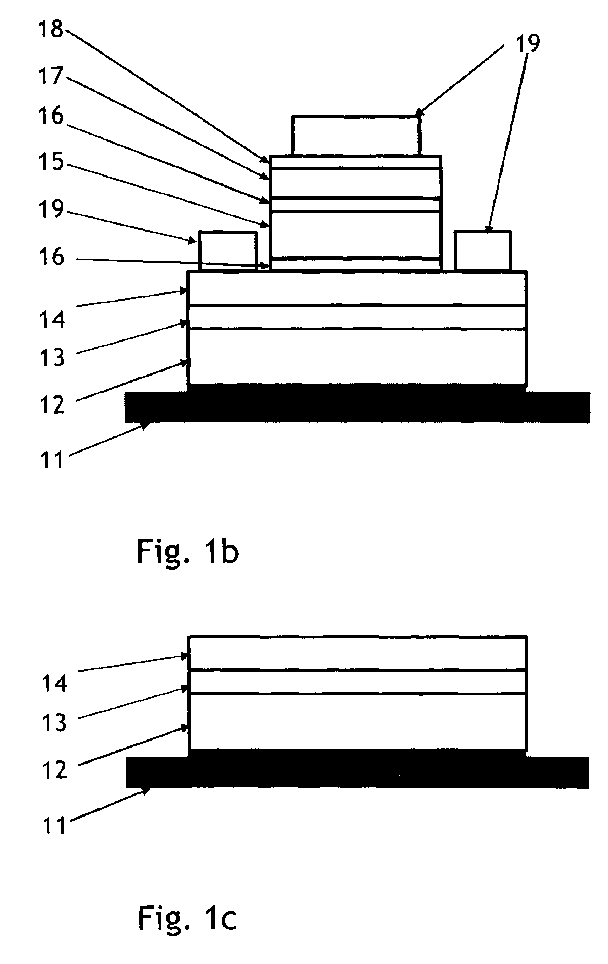

Figure 1b is an exemplary schematic representation of the structure of a photodetector section of a photonic integrated circuit according to some embodiments.
Figure 1c is an exemplary schematic representation of the structure of a passive section of a photonic integrated circuit according to some embodiments.

### DETAILED DESCRIPTION

The examples of embodiments described below are based on the use of InP material, however. However as those skilled in the related are will recognize, the invention is not limited to only InP materials and other type of III-V semiconductor materials may likewise be used within the scope of the invention.

Referring now to figure 1a, on a substrate 11 of semi-insulating material such as for example Fe-doped InP material a buffer layer 12 of InP is grown which is preferably non-intentionally intrinsically doped. This layer may provide a relatively low conductive capability and low insertion loss. A typical diameter for the substrate 11 may be for example in the range of about 5 to 7.5 cm (about 2 to 3 inches) and a typical thickness of the buffer layer may be for example about 1.3 µm.

The buffer layer 12 is covered with an InGaAsP waveguide core layer 13 which may be non-intentionally doped. The waveguide core may be used for guiding the light towards photodetectors, it may separate the components of the incoming polarized light or it may cause to a signal to interfere with a local oscillator, and the like. A typical bandgap wavelength for this layer may be in the range of about 1.15 µm to about 1.45 µm for example about 1.4 µm and a typical thickness of the layer may be for example about 0.17 µm.

Next, a layer of n-doped InP (n:lnP) material 14 is grown on the waveguide core layer 13. The n:lnP layer 14 fulfils a number of functionalities.

One functionality of the n:InP layer 14 is to serve as an upper cladding layer over the waveguide core layer 13 due to its lower refractive index. The level of refraction is determined by the bandgap wavelength. Therefore for a specified bandgap wavelength a corresponding refractive index may be set.

Another functionality of the n:InP layer 14 is to serve as a conductive layer due to its level of concentration of electrons in the n-doped material for example about 10¹⁸/cm³.

Furthermore, the capacity of the n:InP layer 14 to conduct electric current may enables its use as a local heater in the device. This is due to the fact that although the n:InP layer 14 is capable of conducting, it nevertheless presents certain level of resistance. This resistance effect may be taken advantage of in order to adjust the temperature within the waveguide and a change in the temperature of the waveguide may cause a change in the index of refraction of the waveguide which in turn gives rise to phase shift in the travelling light. Therefore, the n:InP layer 14 may be used to adjust the phase shift as a function of a current applied to the n:InP layer 14. This effect is called thermooptic phase shifting. The thermooptic phase shifting may be used for It may be used, for example, to adjust the phase in one arm of a Mach-Zehnder interferometer for the purpose of controlling the portion of light which exits each interferometer output. A typical thickness for this layer may be for example about 0.52 µm. Next, a first layer of InGaAsP 16 is provided above the n:InP layer 14 which may have a typical thickness of for example about 0.2 µm and may be n-doped at about 10¹⁸/cm³ followed by an absorption layer of InGaAs 15 which may be non-intentionally doped at about 10¹⁵/cm³ with a typical thickness of for example about 0.63 µm and next a second layer of InGaAsP 16 which may be p-doped at for example about 10¹⁹/cm³ with a typical thickness of for example about 0.2 µm. In figure 1a, the first and second layers of InGaAsP 16 are shown to be on the lower and the upper sides of the InGaAS layer 15. These three layers, *i*.*e*. the first layer of InGaAsP 16 the layer of InGaAs 15 and the second layer of InGaAsP 16 in combination form an absorber structure due to the effect of absorbing the incoming light energy and converting it into electric current and which in combination with the previously described layers, *i*.*e* buffer layer 12, waveguide core layer 13 and cladding layer 14 may form a photodetector.

Next an InP layer 17 is grown on the second layer of InGaAsP 16 which may be p-doped at about 10¹⁹/cm³ and may have a typical thickness of the p-type layer having a thickness of about or greater than 0.30 µm (*i*.*e*. 300 nm), for example 0.40 µm, followed by a cap layer of InGaAs 18 which may be p-doped at about 10²⁰/cm³ and may have a typical thickness of for example about 0.10 µm. The refractive index of the p-type layer 17 may preferably be lower than the refractive index of the absorber layer 15 so that the light stays in the absorber and does not extend to the InGaAs layer and metal on top.

Once the structure as shown is figure 1a is complete, the structure then undergoes masking and etching processes as described below with reference to figure 1b and 1c. In these figures like elements have been given like reference numerals as those of figure 1a.

A suitable mask is used in order to cover the photodetector area(s) and etch off all layers above the n:InP layer 14 in the unmasked regions.

This operation provides ridges on the device which correspond to areas to be used for the photodetector section(s) which may be represented in figure 1b by the reference numerals 12, 13, 14, 15, 16, 17 and 18.

A further suitable mask is used to pattern and etch the waveguide(s), within the passive section(s), using reactive-ion etching (which is a know technique using a chemically reactive plasma to etch the semiconductor). In this manner ridges are provided on the device which correspond to areas to be used for the structure of the passive sections which include the passive waveguide(s). This may be represented by the reference numerals 12, 13 and 14 in figure 1 c.

The following steps are optional and are provided for the sake of completeness of the description. Those skilled in the related art will realize that other operations for protecting and providing connections may also be used within the scope of the embodiments.

A layer of glass may be deposited on the entire surface of the device which may serve as a capacitor dielectric and may protect the waveguide(s) and photodetector(s) and pattern openings for photodiode(s) and capacitor connections of the photodetector(s) (not shown in the figures).

The resulting structure may then be planarized so as to provide a flat upper surface by spinning the device on benzocyclobutene (BCB) which is a known polymer used for such purpose. Holes are opened in planarized surfaces as defined by appropriate masks (one for the n-layer contacts and capacitor tops and one for the p-layer contacts.

Holes may then be opened in the flat covering surface of the BCB which are used for providing contact spots for the PDs, capacitors, and parts used on the n:InP layer 14 used for thermooptic phase shifting. The locations of the holes are set by appropriate masking operation.

Next, metal may be deposited to provide electric contacts by patterning the areas using masks, to maintain the metal where it is needed and lifting off the metal where it is not needed. The metal contact points are represented in figure 1b by reference numerals 19. The pattern of the metals are set by appropriate masking operation.

It is to be noted that the first order guided mode (the first order mode being understood as the next higher mode from the fundamental mode) of the absoerber 16,15,16 is phase-matched to the fundamental guided mode of the passive waveguide 12, 13, 14. In this manner, the optical mode couples efficiently from the passive waveguide to the absorber through a short distance and yet the absorber may be relatively very thick (in the order of 0.67 µm) while having low capacitance and keeping the optical mode at a suitable distance away from the top contact metal. In order to obtain said phase-matching property certain design criteria may be observed. An example of such design criteria is given below:

At a first step the propagation constant of the fundamental mode in the passive waveguide core is calculated. This may be done by assuming that the absorber region is replaced with plain InP material. Next, the propagation constant of the first-order mode in the absorber section is calculated. This may be done by assuming that the passive waveguide is replaced with plain InP material. Then a thickness is chosen for the absorber section such that the calculated propagation constants preferably become approximately equal. It is to be noted that the two propagation constants need not be exactly equal, however equal or close to equal values are preferable because the more the two values approach equality the shorter the photodetector may be in size, and a short size of the photodetector contributes to maximizing the photodetector speed.

Preferable selection of the propagation constant of a guided mode of the absorber section, which is other than its fundamental mode, may be made such that the absolute value of the difference between said propagation constant of the guided mode, other than a fundamental guided mode, in the absorber layer and the propagation constant of a fundamental guided mode in the passive core layer is less than 0.3 rad/µm. This is to ensure that the two modes remain substantially in phase over several microns so that a significant amount of energy in the fundamental propagation mode of the passive waveguide may transfer to a propagation mode in the absorber.

It is further to be noted that instead of the first-order mode in the absorber, the second-order mode, third-order mode, or further orders may be used. However, in general it is undesirable to use the fundamental mode in the absorber because in such case, in order to match the propagation constant of the absorber to that of the passive waveguide, the absorber will have to be thinner than the passive waveguide, whereas the refractive index of an absorber is typically higher than a passive waveguide. If the absorber is very thin, then the depletion width of the photodetector will be very small and thus the photodetector capacitance will be very high, resulting in a very slow speed.

The InP layer 17 on top of the absorber section may be made thick enough so that the optical mode guided in the absorber section does not reach the metal layer, where a very strong unwanted absorption is present with a strong possibility of exciting an unwanted plasmon. Preferred values for the thickness of the InP layer 17 may be about or greater than 300 nm.

As can be appreciated from the above description, the entire process requires only one epitaxial process and only six photomasks (namely one for the PD section, one for the waveguide section, one for the glass openings, one for the metal pattern and two for the BCB openings).

In this manner, a high performance, dual-polarization receiver PIC may be obtained which is easy to manufacture and can be produced in a fast and straightforward manner. Such simplification in manufacture may lead to high yield, low cost, and ease of technology transfer.

The dual-polarization capability of the device is obtained due to the effect of the waveguide core layer 13 as described above.

It is to be noted that the list of structures corresponding to the claimed means are not exhaustive and that one skilled in the art understands that equivalent structures can be substituted for the recited structure without departing from the scope of the invention.

It is also to be noted that the order of the steps of the method of the invention as described and recited in the corresponding claims is not limited to the order as presented and described and may vary without departing from the scope of the invention.

It should be appreciated by those skilled in the art that any block diagrams herein represent conceptual views of illustrative circuitry embodying the principles of the invention.

## Claims

1. A method of manufacturing a photonic integrated circuit comprising:
• growing, on a substrate, one or more passive sections comprising a passive core layer and at least one upper cladding layer of n-type material; and
• growing one or more photodetector sections, comprising a passive core layer, at least one upper cladding layer of n-type material, at least one absorber layer and a p-type layer having a lower refractive index than the refractive index of the absorber layer;
wherein the thickness of the absorber layer is chosen such that the absolute value of the difference between the propagation constant of a guided mode, other than the fundamental guided mode, in the absorber layer and the propagation constant of the fundamental guided mode in the passive core layer is less than 0.3 rad/µm.

2. The method of claim 1, wherein:
the passive section comprises:
• a buffer layer of InP material grown on a substrate of a semiinsulating material;
• an InGaAsP waveguide core layer on the buffer layer;
• a layer of n-doped InP material on the waveguide core layer wherein the InP layer is configured to serve as an upper cladding layer over the waveguide core layer, as a conductive layer and as a temperature adjustment layer; and
the photodetector section comprises:
• a buffer layer of InP material grown on a substrate of a semi-• insulating material;
• an InGaAsP waveguide core layer on the buffer layer;
• a layer of n-doped InP material on the waveguide core layer wherein the InP layer is configured to serve as an upper cladding layer over the waveguide core layer, as a conductive layer and as a temperature adjustment layer;
• a first layer of InGaAsP above the InP layer followed by a layer of InGaAs and a second layer of InGaAsP; and
• the p-type layer.

3. The method of claim 1 or claim 2, wherein the p-type layer has a thickness of about or greater than 300 nm.

4. A photonic integrated circuit comprising one or more passive sections, a passive section comprising a passive core layer and at least one upper cladding layer of n-type material; one or more photodetector sections, a photodetector section comprising a passive core layer and at least one upper cladding layer of n-type material and at least one absorber layer and a p-type layer having a lower refractive index than the refractive index of the absorber layer; and wherein the thickness of the absorber layer is such that the absolute value of the difference between the propagation constant of a guided mode, other than the fundamental guided mode, in the absorber layer and the propagation constant of the fundamental guided mode in the passive core layer is less than 0.3 rad/µm.

5. The photonic integrated circuit of claim 4 wherein the p-type layer has a thickness of about or greater than 300 nm.

6. A dual-polarization receiver comprising the photonic integrated circuit of claims 4 or 5.

7. The receiver of claim 6 wherein the receiver is a monolithic InP dual-polarization receiver.

8. An optical receiver unit comprising dual-polarization receiver of claim 6 or claim 7.

## Patentansprüche

1. Verfahren zur Herstellung einer photonischen integrierten Schaltung, umfassend:
• Züchten, auf einem Substrat, eines oder mehrerer passiver Abschnitte mit einer passiven Kernschicht und mindestens einer oberen Mantelschicht aus einem N-Typ-Material; und
• Züchten eines oder mehrerer Photodetektorabschnitte, umfassend eine passive Kernschicht, mindestens eine obere Mantelschicht aus einem N-Typ-Material, mindestens eine Absorberschicht und eine P-Typ-Schicht mit einem Brechungsindex, der niedriger ist als der Brechungsindex der Absorberschicht;
wobei die Dicke der Absorberschicht derart gewählt wird, dass der absolute Wert der Differenz zwischen der Ausbreitungskonstante eines anderen geführten Modes als der fundamentale geführte Mode in der Absorberschicht und der Ausbreitungskonstante des fundamentalen geführten Modes in der passiven Kernschicht geringer als 0,3 rad/µm ist.

2. Verfahren nach Anspruch 1, wobei
der passive Abschnitt umfasst:
• Eine Pufferschicht aus einem auf einem Substrat eines halbisolierenden Materials gezüchteten InP-Material;
• eine InGaAsP-Wellenleiter-Kernschicht auf der Pufferschicht;
• eine Schicht aus einem N-dotierten InP-Material auf der Wellenleiter-Kernschicht, wobei die InP-Schicht dafür konfiguriert ist, als eine obere Mantelschicht über der Wellenleiter-Kernschicht, als eine leitfähige Schicht und als eine Temperierschicht zu dienen; und
der Photodetektorabschnitt umfasst:
• Eine Pufferschicht aus einem auf einem Substrat eines halbisolierenden Materials gezüchteten InP-Material;
• eine InGaAsP-Wellenleiter-Kernschicht auf der Pufferschicht;
• eine Schicht aus einem N-dotierten InP-Material auf der Wellenleiter-Kernschicht, wobei die InP-Schicht dafür konfiguriert ist, als eine obere Mantelschicht über der Wellenleiter-Kernschicht, als eine leitfähige Schicht und als eine Temperierschicht zu dienen;
• eine erste InGaAsP-Schicht oberhalb der InP-Schicht, gefolgt von einer InGaAs-Schicht und einer zweiten InGaAsP-Schicht; und
• die P-Typ-Schicht.

3. Verfahren nach Anspruch 1 oder Anspruch 2, wobei die P-Typ-Schicht eine Dicke von rund oder über 300 nm aufweist.

4. Photonische integrierte Schaltung mit einem oder mehreren passiven Abschnitten, wobei ein passiver Abschnitt eine passive Kernschicht und mindestens eine obere Mantelschicht aus einem N-Typ-Material umfasst; einem oder mehreren Photodetektorabschnitten, wobei ein Photodetektorabschnitt eine passive Kernschicht und mindestens eine obere Mantelschicht aus einem N-Typ-Material und mindestens eine Absorberschicht und eine P-Typ-Schicht mit einem Brechungsindex, der niedriger als der Brechungsindex der Absorberschicht ist, umfasst; und wobei die Dicke der Absorberschicht derart beschaffen ist, dass der absolute Wert der Differenz zwischen der Ausbreitungskonstante eines anderen geführten Modes als der fundamentale geführte Mode in der Absorberschicht und der Ausbreitungskonstante des fundamentalen geführten Modes in der passiven Kernschicht geringer als 0,3 rad/µm ist.

5. Photonische integrierte Schaltung nach Anspruch 4, wobei die P-Typ-Schicht eine Dicke von rund oder über 300 nm aufweist.

6. Dualpolarisierter Empfänger, umfassend die photonische integrierte Schaltung gemäß den Ansprüchen 4 oder 5.

7. Empfänger nach Anspruch 6, wobei der Empfänger ein monolithischer dualpolarisierter InP-Empfänger ist.

8. Optische Empfängereinheit, umfassend den dualpolarisierten Empfänger gemäß Anspruch 6 oder 7.

## Revendications

1. Procédé de fabrication d'un circuit intégré photonique comprenant les étapes suivantes :
• faire croître, sur un substrat, une ou plusieurs sections passives comprenant une couche de coeur passive et au moins une couche de revêtement supérieure de matériau de type n ; et
• faire croître une ou plusieurs sections de photodétection, comprenant une couche de coeur passive, au moins une couche de revêtement supérieure de matériau de type n, au moins une couche d'absorption et une couche de type p présentant un indice de réfraction inférieur à l'indice de réfraction de la couche d'absorption ;
dans lequel l'épaisseur de la couche d'absorption est choisie de sorte que la valeur absolue de la différence entre la constante de propagation d'un mode guidé, autre que le mode guidé fondamental, dans la couche d'absorption et la constante de propagation du mode guidé fondamental dans la couche de coeur passive soit inférieure à 0,3 rad/µm.

2. Procédé selon la revendication 1, dans lequel :
la section passive comprend :
• une couche tampon de matériau InP ayant crû sur un substrat d'un matériau semi-isolant ;
• une couche de coeur de guide d'ondes d'InGaAsP sur la couche tampon ;
• une couche de matériau InP dopé n sur la couche de coeur de guide d'ondes où la couche d'InP est configurée pour servir de couche de revêtement supérieure sur la couche de coeur de guide d'ondes, comme une couche conductrice et comme une couche d'ajustement de la température ; et
la section de photodétection comprend :
• une couche tampon de matériau InP ayant crû sur un substrat d'un matériau semi-isolant ;
• une couche de coeur de guide d'ondes d'InGaAsP sur la couche tampon ;
• une couche de matériau InP dopé n sur la couche de coeur de guide d'ondes où la couche d'InP est configurée pour servir de couche de revêtement supérieure sur la couche de coeur de guide d'ondes, comme une couche conductrice et comme une couche d'ajustement de la température ;
• une première couche d'InGaAsP au-dessus de la couche d'InP suivie d'une couche d'InGaAs et d'une deuxième couche d'InGaAsP ; et
• la couche de type p.

3. Procédé selon la revendication 1 ou 2, dans lequel la couche de type p a une épaisseur supérieure ou environ égale à 300 nm.

4. Circuit intégré photonique comprenant une ou plusieurs sections passives, une section passive comprenant une couche de coeur passive et au moins une couche de revêtement supérieure de matériau de type n ; une ou plusieurs parties de photodétection, une partie de photodétection comprenant une couche de coeur passive et au moins une couche de revêtement supérieure de matériau de type n et au moins une couche d'absorption et une couche de type p présentant un indice de réfraction inférieur à l'indice de réfraction de la couche d'absorption ; et dans lequel l'épaisseur de la couche d'absorption est telle que la valeur absolue de la différence entre la constante de propagation d'un mode guidé, autre que le mode guidé fondamental, dans la couche d'absorption et la constante de propagation du mode guidé fondamental dans la couche de coeur passive est inférieure à 0,3 rad/µm.

5. Circuit intégré photonique selon la revendication 4, dans lequel la couche de type p a une épaisseur supérieure ou environ égale à 300 nm.

6. Récepteur à polarisation double comprenant le circuit intégré photonique selon la revendication 4 ou 5.

7. Récepteur selon la revendication 6 dans lequel le récepteur est un récepteur à polarisation double d'InP monolithique.

8. Unité de réception optique comprenant un récepteur à polarisation double selon la revendication 6 ou 7.
